Europäisches Patentamt

European Patent Office

Office européen des brevets

(11) Numéro de publication: **0 372 447**
**A1**

## (12) DEMANDE DE BREVET EUROPEEN

(21) Numéro de dépôt: **89122312.5**

(22) Date de dépôt: **04.12.89**

(51) Int. Cl.⁵: **G03B 27/54, G03G 15/04,**
**H04N 1/028**

(30) Priorité: **09.12.88 FR 8816225**

(43) Date de publication de la demande:
**13.06.90 Bulletin 90/24**

(84) Etats contractants désignés:
**AT BE CH DE ES FR GB GR IT LI LU NL SE**

(71) Demandeur: **ALCATEL BUSINESS SYSTEMS**
**12, rue de la Baume**
**F-75008 Paris(FR)**

(72) Inventeur: **Savalle, Patrick**
**8, rue du Tertre**
**F-92150 Suresnes(FR)**
Inventeur: **Bellon, Patrick**
**25bis, rue de Rochefort**
**F-78120 Clairefontaine en Yvelines(FR)**

(74) Mandataire: **Weinmiller, Jürgen et al**
**Lennéstrasse 9 Postfach 24**
**D-8133 Feldafing(DE)**

(54) **Dispositif de correction d'éclairement pour analyseur de document.**

(57) L'invention concerne un dispositif de correction d'éclairement pour analyseur de document comportant un tube d'éclairage (1) qui est de forme tubulaire et qui est destiné à illuminer une zone d'un document (3) au profit d'un lecteur se présentant classiquement sous la forme d'une barrette (5) apte à scruter, en une même opération, au moins une portion rectiligne de la zone éclairée.

Il est constitué par un masquage, réalisé sous forme d'une alternance de zones, laissant successivement filtrer ou non la lumière du tube d'éclairage vers la barrette de lecture, qui s'étend sur le tube ou sur un miroir parallèle au tube et/ou à la barrette sur le tube ou sur un miroir, l'espacement des zones, de part et d'autre d'une zone centrale, vers les deux extrémités du masquage évoluant de manière que l'éclairement vu de la barrette soit conservé uniforme pour un document de couleur uniforme.

FIG.1

# Dispositif de correction d'éclairement pour analyseur de document

L'invention concerne un dispositif de correction d'éclairement pour analyseur de document comportant un tube d'éclairage qui est de forme tubulaire et qui est destiné à illuminer une zone d'un document au profit d'un lecteur se présentant classiquement sous la forme d'une barrette apte à scruter, en une même opération, au moins une portion rectiligne de la zone éclairée.

Les analyseurs de documents, usuels, comportent chacun un système composé d'un tube d'éclairage généralement de type fluorescent, disposé de manière à illuminer une zone longiforme d'un support sur lequel vient reposer le document à analyser. Ce système comporte aussi une barrette de lecture, classiquement un dispositif à couplage de charge, qui scrute au travers d'un objectif une portion d'allure rectangulaire de la zone éclairée, qui est orientée parallèlement à l'axe longitudinal du tube d'éclairage et qui correspond usuellement à une ligne selon l'une des deux dimensions d'un document.

L'éclairement des documents est plus important dans la partie médiane de la zone éclairée que sur les bords et en particulier au centre d'une ligne. Les bords d'une image fournie par un objectif à une barrette de lecture sont de plus soumis à un effet de vignettage en raison de la diminution du rendement de cet objectif à sa périphérie.

De ce fait, une correction est généralement effectuée pour obtenir un éclairement homogène de la portion scrutée.

Une solution connue consiste à employer un tube d'éclairage suffisamment long pour reporter les zones d'éclairement moindres au-delà des limites d'une ligne du document scruté. Mais on s'efforce de limiter l'encombrement des machines et en conséquence la longueur des tubes d'éclairage est choisie la plus courte possible. De plus d'allongement du tube n'élimine pas le vignettage qui n'est le plus souvent résolu que par l'insertion d'un diaphragme devant l'objectif entre ce dernier et la zone éclairée du support ou l'on vient positionner le document à analyser. Cette solution qui est efficace a pour inconvénient d'exiger une grande précision de dimensionnement et surtout de positionnement du diaphragme.

Une autre solution connue consiste à réaliser un masque sur le tube d'éclairage de manière à ne laisser filtrer la lumière qu'au travers d'une fenêtre qui est réalisée longitudinalement selon l'axe du tube sur une portion cylindrique limitée de ce dernier set qui est plus large à ses extrémités que dans sa zone centrale.

Cette solution également efficace a pour inconvénient d'exiger un positionnement angulaire très précis du tube d'éclairage par rapport au reste du dispositif et par conséquent un agencement de positionnement spécialement précis du tube d'éclairage par rapport au support et à la barrette de lecture.

L'invention propose donc un dispositif de correction d'éclairement pour analyseur de document comportant un tube d'éclairage qui est de forme tubulaire et qui est disposé de manière à illuminer une zone de lecture, d'allure allongée, d'un support contre lequel vient se placer le document à analyser, au profit d'un lecteur comprenant une barrette de lecture apte à scruter, au travers d'un objectif, au moins une portion rectiligne de la zone du document qui est située dans la zone de lecture selon l'axe longitudinal de cette zone et qui est donc éclairée.

Selon une caractéristique de l'invention, le dispositif de correction est constitué par un masquage réalisé sous forme d'une alternance de zones laissant successivement filtrer ou non la lumière du tube d'éclairage vers la barrette de lecture qui s'étend sur le tube ou sur un miroir parallèle au tube et/ou à la barrette, l'espacement des zones à partir du centre vers les deux extrémités du masquage évoluant de manière que l'éclairement vu de la barrette soit conservé uniforme.

L'invention, ses caractéristiques et ses avantages sont précisés dans la description qui suit, en liaison avec les figures répertoriées ci-dessous.

Les figures 1 et 2 présentent respectivement une vue de face et une vue de dessus d'un agencement de lecture pour analyseur de document.

La figure 3 présente un second exemple de dispositif de correction.

Les figures 4, 5 et 6 présentent respectivement trois variantes d'un premier exemple d'un dispositif de correction selon l'invention pour analyseur de document.

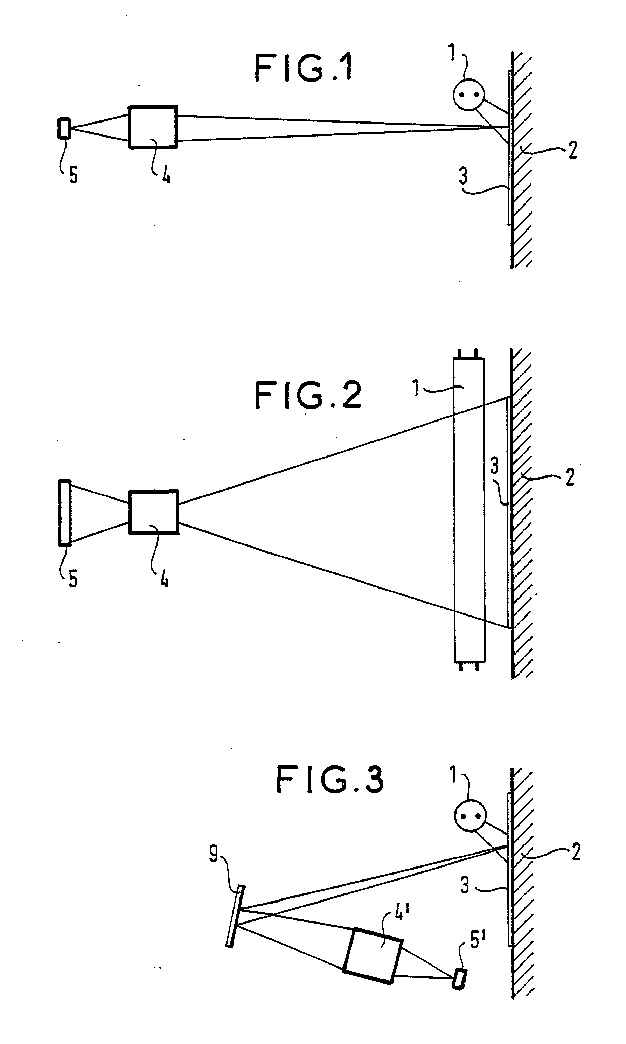

L'agencement de lecture d'analyseur de document qui est présenté sur les figures 1 et 2 comporte un tube d'éclairage 1, de type fluorescent, qui est disposé parallèlement à un support 2, ici supposé plan, prévu pour servir d'appui aux documents lors de leur traitement par l'analyseur. Ce support 2 est par exemple susceptible d'être une partie intégrante du dispositif de lecture de l'analyseur sur laquelle vient coulisser le document à lire ou encore une surface plane, sans rapport avec l'analyseur, sur laquelle on place un document avant de faire glisser l'analyseur sur lui pour le lire.

Le tube d'éclairage 1 est usuellement un tube cylindrique électriquement alimenté par l'intermédiaire de connexions d'extrémité non représentées, il est monté fixe dans l'analyseur et il est disposé de manière à venir illuminer une zone, dite de lecture, du support 2 ou d'un document 3 couvrant cette zone. En raison de l'allongement du tube d'éclairage 1, la zone de lecture illuminée est de forme allongée selon un axe dont la direction est liée à celle du tube et le plus souvent parallèle à lui. On s'arrange souvent notamment dans les appareils où le support 2 est intégré pour que la zone illuminée s'étende sur une longueur légèrement supérieure à au moins l'une des dimensions des plus grands documents admissibles.

Le faisceau lumineux émis par le tube d'éclairage 1 est renvoyé vers un objectif optique 4, après avoir frappé le support ou le document placé sur la zone de lecture de ce support, en regard du tube.

L'objectif 1 est agencé et disposé de manière à concentrer les rayons lumineux qui lui sont renvoyés par le document, au niveau de la zone de lecture, sur les capteurs parallèles d'une barrette de lecture 5, de type dispositif à couplage de charge, dont la longueur est très inférieure à celles du tube d'éclairage et de la zone de lecture illuminée.

L'éclairement quasi uniforme réalisé au niveau de la surface illuminée d'un document au niveau de la zone de lecture est modulé par les inscriptions réalisées le plus souvent en noir sur blanc sur le document et au moins une portion de l'image de la zone de lecture illuminée est reproduite au niveau de la barrette de lecture qui est apte à convertir les signaux lumineux reçus en signaux électriques, codés usuellement sous forme numérique de manière à pouvoir aisément être stockés et traités.

Selon l'invention, un masquage est réalisé sous forme d'une alternance de zones laissant successivement filtrer ou non la lumière du tube d'éclairage 1 vers la barrette de lecture 5, ce masquage étant préférablement disposé pratiquement en parallèle à la barrette par exemple sur le tube. L'espacement des zones alternativement transparentes et opaques du masquage à partir du centre et vers ses deux extrémités opposées évolue de manière que l'éclairement vu de la barrette soit conservé uniforme pour un document de couleur uniforme.

Dans une première forme de réalisation, le masquage est réalisé sur le tube d'éclairage 1, sous forme d'anneaux 6, ou de portions d'anneaux opaques, qui sont alors portés par le secteur cylindrique du tube prévu pour assurer l'éclairage de la zone de lecture et destiné pour cette raison à être orienté de manière à regarder dans la direction de cette zone, lorque le tube est en place dans l'analyseur.

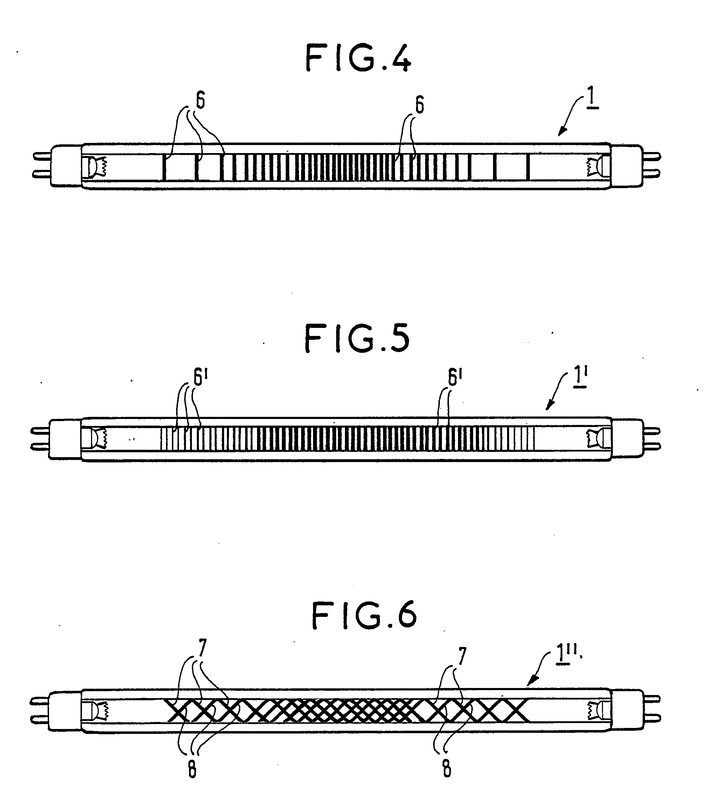

Selon une première solution présentée en figure 4, les anneaux 6, ou portions d'anneaux, sont constitués par des bandes sombres de même largeur qui sont ménagées sur la paroi transparente, ou du tube 1 à des espacements qui croissent du milieu du tube vers les extrémités, de part et d'autre d'une zone centrale, l'élargissement grandissant des bandes transparentes 10, obtenues entre les bandes sombres, compensant l'affaiblissement d'éclairement dans les zones d'extrémités du tube.

Selon une seconde solution présentée en figure 5, les anneaux 6, ou portions d'anneaux, sont constitués par des bandes sombres transversalement réalisées à espacement régulier sur la longueur du tube d'élcairage 1, les bandes sombres et/ou opaques situées vers les extrémités, au delà d'une zone centrale, ayant une épaisseur qui diminue en fonction de leur éloignement de cette zone centrale. Une combinaison de bandes sombres d'épaisseurs décroissantes au fur et à mesure de leur éloignement de la zone centrale du tube et de bandes transparentes dont l'extension croit plus vite que la diminution d'épaisseur des bandes sombres vers les extrémités est aussi réalisable.

Selon une troisième solution présentée en figure 6, l'alternance de zones laissant successivement filtrer ou non la lumière du tube vers la barrette est créée par deux groupes de bandes sombres 7 et 8 qui se croisent en ménageant entre elles des zones transparentes dont les surfaces respectives augmentent, vers les extrémités du tube, au-delà d'une zone centrale. Les bandes sombres d'un groupe sont parallèles entre elles et sont disposées en oblique par rapport à l'axe longitudinal du tube d'éclairage 1, l'obliquité des deux groupes étant égale et de signe opposé.

Dans une seconde forme de réalisation, le masquage n'est plus réalisé sur le tube d'éclairage 1, mais sur une lame réfléchissante positionnée sur le trajet lumineux entre le tube d'éclairage et la barrette de lecture. La disposition des zones transparentes et opaques est susceptible d'être obtenue de l'une des manières évoquées précédemment.

Dans la solution présentée sur la figure 6, le tube d'éclairage 1 est disposé par rapport au support 2 sur lequel on vient placer le document de la manière qui a été évoquée en liaison avec la figure 1.

Un miroir 9 est placé de manière à recevoir la lumière émise par le tube après que celle-ci se soit réfléchie sur la zone de lecture illuminée d'un document placé contre le support 2, il renvoie la lumière qu'il reçoit vers un objectif 4' derrière lequel est positionnée une barrette de lecture 5' chargée de convertir sous forme électrique les signaux optiques qu'elle capte. Le miroir 9 comporte des bandes non réfléchissantes disposées de manière analogue à l'une quelconque des solutions évoquées plus haut pour le tube. L'alternance des zones réfléchissantes ou non du miroir et l'extension grandissante des premières nommées vers les extrémités de la zone du miroir éclairée par réflexion, de part et d'autre d'une portion centrale de cette zone éclairée, permet de réaliser l'uniformisation d'éclairement déjà évoqué précédemment, au niveau de la barrette de lecture 5'.

**Revendications**

1) Dispositif de correction d'éclairement pour analyseur de document comportant un tube d'éclairage (1) qui est de forme tubulaire et qui est disposé de manière à illuminer une zone de lecture, d'allure allongée d'un support (2) contre lequel vient se placer le document (1) à analyser, au profit d'un lecteur comprenant une barrette de lecture (5) apte à scruter, au travers d'un objectif (4), au moins une portion rectiligne de la zone du document qui est située dans la zone de lecture selon l'axe longitudinal de cette zone et qui est donc éclairée, caractérisé en ce qu'il est constitué par un masquage, réalisé sous forme d'une alternance de zones (6, 7 ou 8 et 10) laissant successivement filtrer ou non la lumière du tube d'éclairage vers la barrette de lecture, qui s'étend sur le tube ou sur un miroir parallèle au tube et/ou à la barrette l'espacement des zones, de part et d'autre d'une zone centrale, vers les deux extrémités du masquage évoluant de manière que l'éclairement vu de la barrette soit conservé uniforme pour un document de couleur uniforme.

2) Dispositif de correction selon la revendication 1, caractérisé en ce que le masquage est réalisé sur le tube d'éclairage.

3) Dispositif de correction selon la revendication 1, caractérisé en ce que le masquage est réalisé sur un miroir plan sur lequel la lumière émanant du tube d'éclairage est réfléchie avant ou après avoir illuminé la zone de lecture.

4) Dispositif de correction selon la revendication 1, caractérisé en ce que l'alternance de zones laissant successivement filtrer ou non, la lumière du tube vers la barrette de lecture est constituée par une suite de bandes parallèles (6 ou 6' et 10 ou 10') qui sont disposées de manière que la surface éclairante entre deux bandes successives opaques (6 ou 6') croisse en partant des surfaces éclairantes du centre vers celles qui sont ménagées vers les extrémités.

5) Dispositif de correction selon la revendication 4, caractérisé en ce que l'alternance de zones laissant successivement filtrer ou non, la lumière du tube vers la barrette de lecture est constituée par une suite de bandes parallèles alternativement transparentes (10 ou 10') et opaques (6 ou 6') qui sont disposées transversalement par rapport à la direction de la suite qu'elles forment. 6) Dispositif de correction selon la revendication 4, caractérisé en ce que l'alternance de zones laissant successivement filtrer ou non, la lumière du tube vers la barrette de lecture est créée par deux groupes sombres (7 et 8) qui se croisent en ménageant entre elles des zones transparentes dont les surfaces respectives augmentent, vers les extrémités du tube, au-delà d'une zone centrale, chaque groupe étant composé de bandes sombres parallèles (7 ou 8), disposées en oblique et espacées de manière identique pour les deux groupes.

7) Dispositif de correction selon la revendication 4, caractérisé en ce que la largeur des bandes opaques du tube diminue vers les extrémités du tube au-delà d'une zone centrale de ce tube.

8) Dispositif de correction selon la revendication 4, caractérisé en ce que l'écartement des bandes opaques du tube d'éclairage augmente vers les extrémités du tube au-delà d'une zone centrale de ce tube.

9) Dispositif de correction selon la revendication 8, caractérisé en ce que les bandes opaques sont de même largeur.

EP 0 372 447 A1

FIG.1

FIG.2

FIG.3

# FIG.4

# FIG.5

# FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | XEROX DISCLOSURE JOURNAL vol. 8, no. 2, March/April 1983; pages 147,148; J.J. APPEL: "Plastic attenuators for lamp adjustment and axial profile shaping" * le document entier * | 1 | G 03 B 27/54 G 03 G 15/04 H 04 N 1/028 |
| A | PATENT ABSTRACTS OF JAPAN vol. 11, no. 26 (P-539)(2473) 24 Janvier 1987; & JP - A - 61 198224 (FUJI XEROX) 02-09-86 | 1 | |
| A | PATENT ABSTRACTS OF JAPAN vol. 5, no. 181 (E-83)(853) 20 Novembre 1981; & JP - A - 56 107671 (NIPPON DENKI) 26-08-81 | 1 | |

DOMAINES TECHNIQUES
RECHERCHES (Int. Cl.5)

G 03 B 27/00
G 03 G 15/00
H 04 H 1/00

Le présent rapport a été établi pour toutes les revendications

| Lieu de la recherche | Date d'achèvement de la recherche | Examinateur |
|---|---|---|
| BERLIN | 06-02-1990 | HOPPE H |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................
& : membre de la même famille, document correspondant

EPO FORM 1503 03.82 (P0402)